# EUROPEAN PATENT SPECIFICATION

(11) **EP 4 112 571 B1**
(45) Date of publication and mention of the grant of the patent: **12.02.2025**
(21) Application number: 22171377.9
(22) Date of filing: 03.05.2022
(51) Int. Cl.: C03B 33/037, C03B 33/07, C03B 33/04

(54) **AUTOMATIC CUTTING METHOD, PARTICULARLY FOR LAMINATED GLASS PANES AND RELATED MACHINE**
AUTOMATISCHES SCHNEIDVERFAHREN, INSBESONDERE FÜR VERBUNDGLASSCHEIBEN UND ENTSPRECHENDE MASCHINE
PROCÉDÉ DE DÉCOUPE AUTOMATIQUE, PARTICULIÈREMENT POUR DES PANNEAUX DE VERRE FEUILLETÉ ET MACHINE ASSOCIÉE

(30) Priority: 01.07.2021 IT 202100017315
(43) Date of publication of application: 04.01.2023
(73) Proprietor: Macotec S.R.L., 23010 Rogolo, (SO) (IT)
(72) Inventor: COLLI, Maurizio, 23019 TRAONA SO (IT)
(74) Representative: Modiano, Micaela Nadia

(56) References cited:
- EP-A1- 2 602 233
- EP-A1- 3 172 173
- WO-A1-2010/043994

## Description

The present invention relates to an automatic cutting method, particularly for laminated glass panes.

In the sector of cutting glass, in particular laminated glass which is made up of two monolithic glass sheets with one or more films of polyvinyl butyral (PVB) interposed between them, there are automatic cutting machines, known in the trade as "cutting tables for laminated glass", which operate through five processing steps:
a) simultaneous scoring of the lower surface and of the upper surface;
b) breakout (in sequence) of both incisions made;
c) heating of the PVB film;
d) separation of the glass panes;
e) cutting of the PVB film.

In more detail, in the known state of the art, cutting tables for laminated glass are thus made from a horizontal worktable that supports the sheet to be cut and in which means and devices are accommodated, known as "stops" or "positioning means", which are adapted to correctly position the sheet in order to perform the cutting to measure.

These devices are usually moveable along the advancement axis of the sheet.

Such machines further comprise a pair of beams, an upper beam and a lower beam, which are arranged along a second axis, perpendicular to the advancement axis, on which slide all the necessary tools for the processing steps listed previously, except for the heating step which is performed by a resistor element arranged along the second axis and positioned as needed.

Since the glass cutting tools perform a translational motion only along the cutting axis, which is a fixed axis, it is evident that cutting tables for laminated glass can cut the sheet only along that axis.

Furthermore, since however it is necessary to cut sheets in order to obtain squares and/or rectangles of different dimensions, the only way to obtain this result is to:
a) translate the sheet and position it, using the positioning means (or stops), at the desired dimension;
b) perform a first cut (following all five of the steps listed above);
c) rotate the portion of sheet thus cut;
d) translate the portion of sheet that was rotated previously, and, using the positioning means again, position it at the desired dimension;
e) perform a second cut (following all five of the steps listed above).

Depending on the type of the machines, the movement (translation, positioning, rotation) of the sheet and of the subsequent sub-sheets can be performed:
a) manually (in the simplest machines): the operator horizontally moves the glass with the aid of an air cushion generated by the machine;
b) automatically (in more complex glass cutting lines) using, depending on the maker, retractable motorized belts installed in the working surface, grippers mounted on a movable bridge that performs a translational motion along the advancement axis, or suckers mounted on a movable bridge that performs a translational motion along the advancement axis.

For curved cuts, it is known to carry out the scoring steps via interpolation of the translation of the sheet along the advancement axis and of the movement of the scoring tools along the cutting axis.

More specifically, tools are adopted that have a free (or sometimes also motorized) rotation axis so that they can "follow" the path set by the interpolation.

The translation of the sheet along the advancement axis is performed with movable grippers or with movable suckers.

The cutting of the sheet is then carried out using cutting wheels with a controlled rotation axis, which follow the path that was scored previously or, alternatively, in order to avoid the complexity and cost of using controlled-axis mechanisms, using balls.

Such conventional machines are not devoid of drawbacks among which is the fact that separation of the cut parts of the glass sheet is left to the operator of the machine, who has to carry out the operation manually.

EP 2 602 233 discloses an automatic cutting method and machine for laminated glass panes.

The aim of the present invention consists in providing a cutting method that make it possible to perform shaped curved cuts with a machining process that enables the machine, in an adequately simple manner and at low cost, to perform all the machining steps without the manual aid of the operator.

Within this aim, an object of the present invention consists in providing an operating method that make it possible to obtain any glass shape desired.

The present disclosure comprises also a cutting machine that is capable of scoring and cutting any type of shape , with any orientation, to the advantage therefore of flexibility of preparation of the machining and of minimization of production waste.

The cutting machine can be made with technologies that are known in and of themselves and which therefore have low manufacturing costs.

The cutting machine is also capable of offering the widest guarantees of reliability and safety in use.

This aim and these and other objects which will become more apparent hereinafter are achieved by an automatic cutting method for laminated glass panes, which comprises the following steps:
- advancing a laminated glass sheet from a loading station to a cutting station of a cutting machine along a substantially straight advancement axis which is parallel to the planar extension of said laminated glass sheet, said laminated glass sheet being constituted by two sheets of monolithic glass with at least one film of plastic material interposed between them;
- simultaneously scoring the lower and upper surfaces of said laminated glass sheet according to at least one preset cutting profile by means of at least one of two mutually opposite cutting heads with a fixed axis and two mutually opposite scoring assemblies which are arranged, respectively, below and above said laminated glass sheet; said scoring assemblies being movable along a substantially straight cutting axis which is parallel to the planar extension of said laminated glass sheet and perpendicular to said advancement axis;
- cutting in sequence of both of the scorings performed in said simultaneous scoring step;
characterized in that it comprises:
- a step of defining primitive profiles of the straight type which are oriented, respectively, parallel to said advancement axis and to said cutting axis in order to define a grid inside the cells of which the contoured profiles of the contour of said laminated glass sheet to be obtained are contained;
- iterating said simultaneous scoring step and said cutting step for the scoring and cutting of said laminated glass sheet according to said primitive profiles;
- iterating said simultaneous scoring step and said cutting step for the scoring and cutting of said laminated glass sheet according to said contoured profiles;
said preset cutting profile comprising said primitive profiles and said contoured profiles and said simultaneous scoring step being obtained from the interpolation of the movements of said laminated glass sheet along said advancement axis and of said scoring assemblies along said cutting axis according to the geometry of said preset cutting profile; said scoring assemblies comprising scoring tools with a free axis which is oriented substantially perpendicular to a horizontal worktable which contains said advancement axis and said cutting axis.

Further characteristics and advantages will become more apparent from the detailed description of a preferred, but not exclusive, embodiment of an automatic cutting machine, particularly for laminated glass panes, which is illustrated for the purposes of non-limiting example with the assistance of the accompanying drawings wherein:

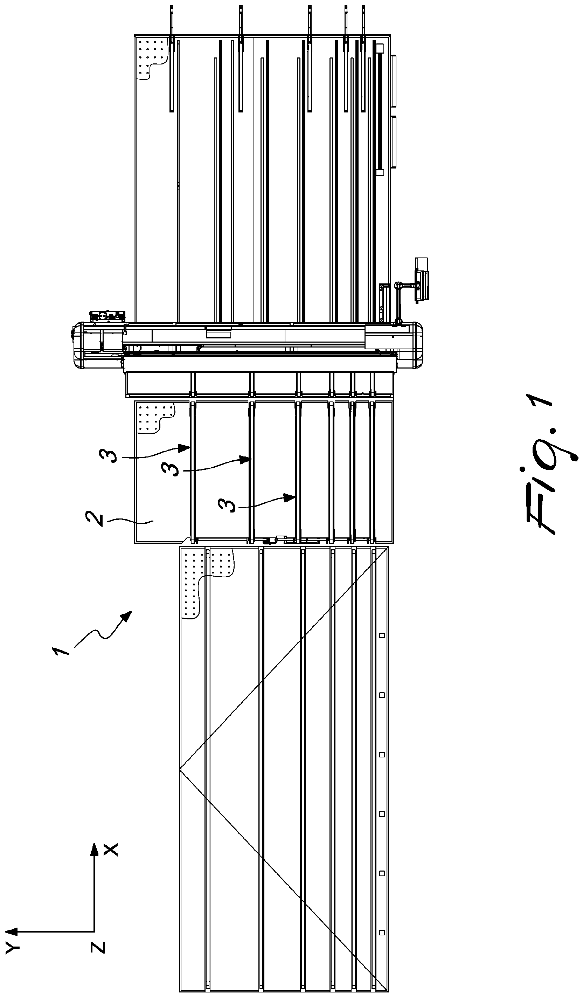

Figure 1 is a plan view from above of the cutting machine according to the present invention;

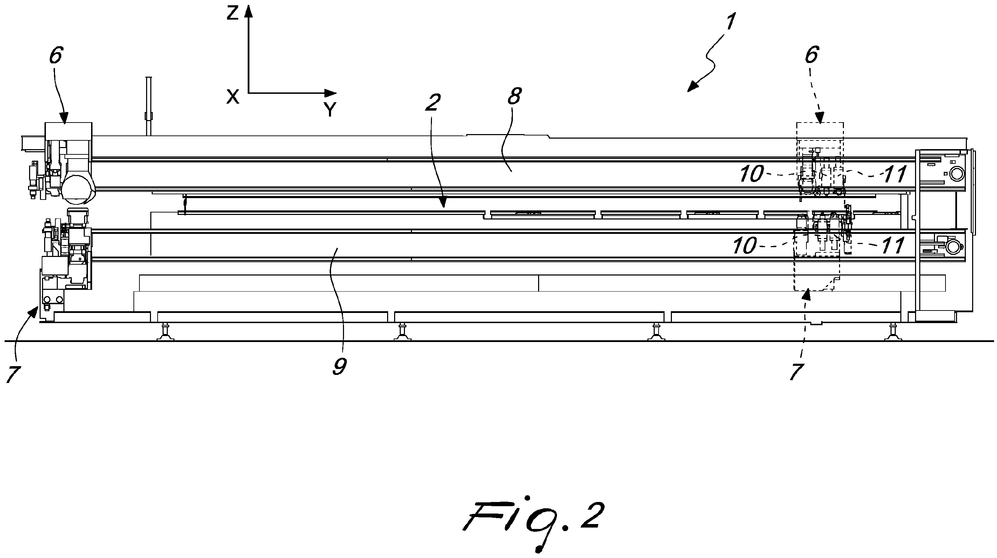

Figure 2 is a front elevation view of the scoring station of the cutting machine shown in Figure 1;
Figure 3 is a plan view from above of an exemplary cutting profile on a laminated glass sheet;
Figures 4 to 11 show, in plan views from above, in a simplified sequence, the steps of machining the laminated glass sheet shown in Figure 3, in order to obtain individual cells containing the contoured profiles;
Figures 12 to 16 show, in plan views from above, in a simplified sequence, the steps of machining the laminated glass sheet shown in Figure 3 for the contoured profile S1.

With reference to the figures, the automatic cutting machine, particularly for laminated glass panes, generally designated by the reference numeral 1, comprises a load-bearing frame, which defines a horizontal worktable 2 provided with a plurality of motorized belts 3 that extend along an advancement axis X, which is substantially parallel to the horizontal worktable 2, and which are adapted to transport a laminated glass sheet 4 from a loading station to a scoring station.

In more detail, such laminated glass sheet 4 is constituted by two sheets of monolithic glass with one or more films made of plastic material, for example polyvinyl butyral (PVB), interposed between them.

The machine 1 further comprises two cutting carriages 6 and 7 which are associated slideably respectively with an upper beam 8 and with a lower beam 9 of the load-bearing frame along a cutting axis Y that is substantially parallel to the horizontal worktable 2 and is substantially perpendicular to the advancement axis X.

In more detail, there are two scoring assemblies 10 and two percussion assemblies 11 which are associated in pairs with the cutting carriages 6 and 7 in a mutually opposite manner.

There is also at least one heating element, not shown for the sake of graphic simplicity, which is adapted for the localized heating of the laminated glass sheet 4, and abutment and positioning means for the correct positioning of the laminated glass sheet 4 in the scoring station.

In addition to the two scoring assemblies 10 and the two percussion assemblies 11 there can be, respectively, two mutually opposite cutting heads 5 with a fixed axis that is movable along the cutting axis Y, and a cutting bar 13 and/or a cutting wheel 14 that are movable along the cutting axis Y and perpendicularly both to the advancement axis X and to the cutting axis Y.

Such devices are normally present on cutting machines of conventional type.

In the embodiment proposed, the percussion assemblies 11 comprise mass impact tools, the mechanical part of which is designed to come into contact with the glass with a certain frequency and force (adjustable manually or automatically on the basis of the thickness of the glass) thus triggering the opening of the scoring.

Completing the machine 1, there are also handling means for the rotation of the laminated glass sheet 4 on the horizontal worktable 2, and two sheet presser elements, of which one is fixed and one is movable, which are adapted to grip the previously cut parts of the laminated glass sheet 4 and to allow the mutual spacing apart of these parts with consequent tearing by traction of the film of plastic material.

Advantageously, as will be better described below, shim elements 12 are interposable between at least one of the sheet pressers and a part of the laminated glass sheet 4, in such a way that each sheet presser engages exclusively with the respective part of the laminated glass sheet 4 without engaging the other part, with the aim of successfully separating the two glass portions by traction.

Furthermore, it should be noted that the cutting carriages 6 and 7 can be split so as to divide the tools between those most used and those least used, thus reducing the weight of the individual carriage and therefore reducing the inertial forces.

In other words, the purpose of this "splitting" is to have the carriages that carry the tools that are used most for the normal operating cycles (fixed-axis cutting heads, cutting wheel, PVB blade) be as light as possible (and therefore able to translate at high speeds and accelerations), while other carriages, which carry the heavier tools that are used occasionally (handling grippers, percussion tools, cup grinding wheel etc.), are parked at the end of the bridge and are engaged by the main carriages as needed.

Moreover, a cup grinding wheel can also be provided, associated with the higher one of the cutting carriages 6 and with its rotation axis oriented parallel to the free axis Z in such a way that, by interpolating the movement of the upper cutting carriage 6, on which it is mounted, with the movement of the laminated glass sheet 4, it is possible to proceed with the removal of the low emissive coating along the same contoured profiles S1, S2, S3 and S4 that will then be scored.

The automatic cutting method, particularly on laminated glass panes, of the machine 1 described above is given below.

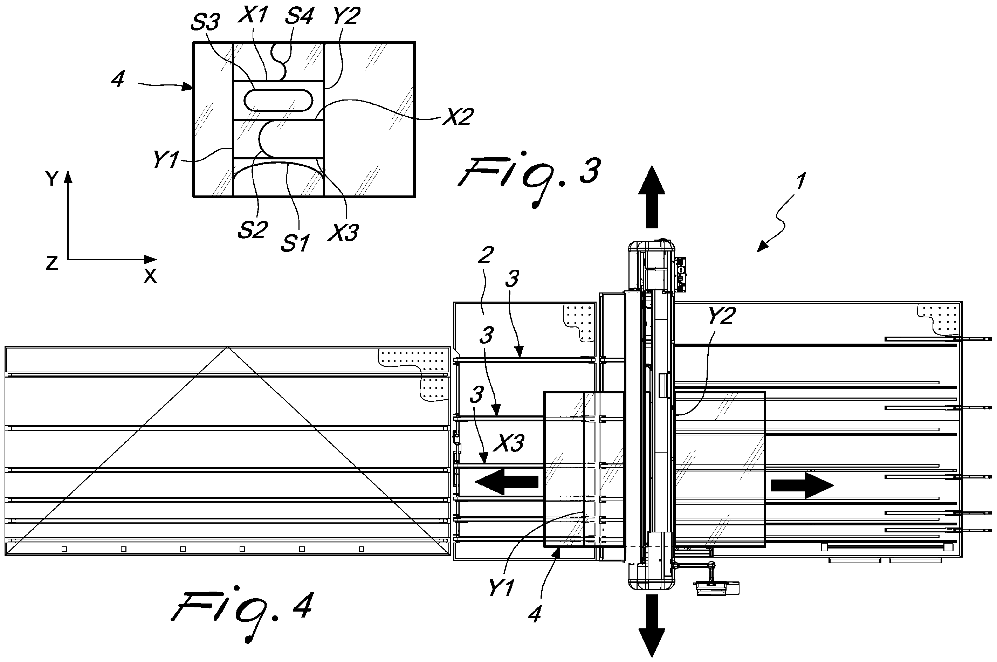

With particular reference to Figure 3, as a function of the contoured profiles S1, S2, S3 and S4 of the shapes of the laminated glass sheet 4 to be obtained, before the laminated glass sheet 4 is positioned in the loading station, the method proceeds with a step of definition of primitive profiles X1, X2, X3, Y1 and Y2 of the straight type which are oriented, respectively, parallel to the advancement axis X and to the cutting axis Y in order to define a grid, inside the cells of which the contoured profiles S1, S2, S3 and S4 are contained.

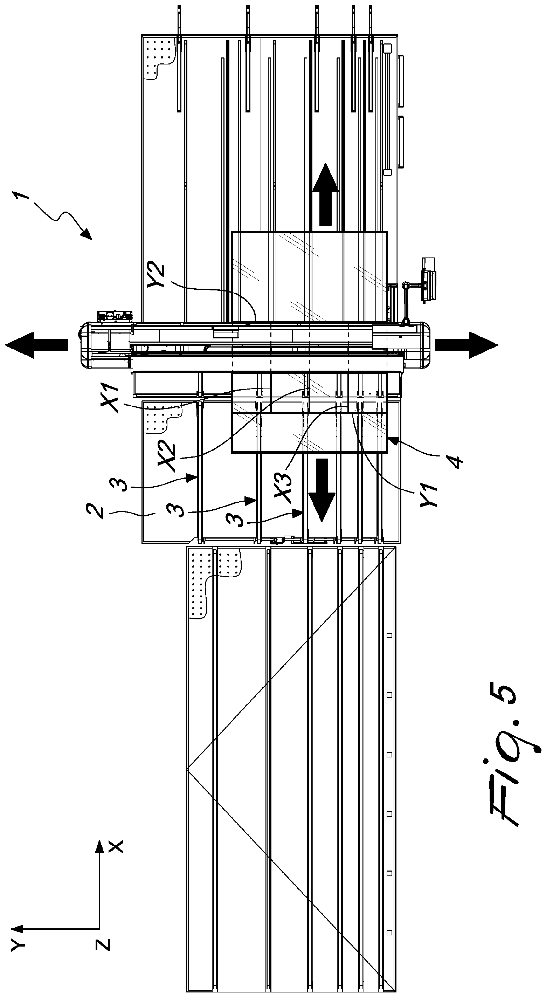

With particular reference to Figures 4 and 5, once the laminated glass sheet 4 is positioned in the loading station, the method proceeds with the step of advancement thereof up to the cutting station along the advancement axis X which, as mentioned previously, is substantially straight and parallel to the planar extension of the laminated glass sheet 4.

Subsequently, there is the step of simultaneously scoring the lower and upper surfaces of the laminated glass sheet 4 according to at least one preset cutting profile by means of at least one of the two mutually opposite cutting heads 5 with a fixed axis and the two mutually opposite scoring assemblies 10 which are arranged, respectively, below and above the laminated glass sheet 4.

As previously described, the scoring assemblies 10 can move along the cutting axis Y which is substantially straight, parallel to the planar extension of the laminated glass sheet 4 and perpendicular to the advancement axis X, and they comprise scoring tools with a free axis Z which is oriented substantially perpendicular to the horizontal worktable 2 containing the advancement axis X and the cutting axis Y.

Immediately afterward comes the step of cutting in sequence of both of the scorings performed in the previous simultaneous scoring step.

In more detail, the cutting step is performed by means of at least one from a cutting bar, a cutting wheel and the two mutually opposite percussion assemblies 11 which are arranged, respectively, below and above the laminated glass sheet 4.

The percussion assemblies 11 are movable along the cutting axis Y and act on the laminated glass sheet 4 according to a preset path corresponding to the preset cutting profile.

Advantageously, the cutting step is performed by means of interpolation of the movements of the laminated glass sheet 4 along the advancement axis X and of the percussion assemblies 11 along the cutting axis Y.

These steps of scoring and cutting are iterated multiple times, for the scoring and cutting of the laminated glass sheet 4 according to the primitive profiles X1, X2, X3, Y1 and Y2.

In other words, first the scoring and the breakout of the primitive profiles Y1 and Y2 are performed, as shown in Figure 4, using the scoring tools with a fixed axis and cutting devices (wheel or bar) that are normally present on this type of machine; then, as shown in Figure 5, the scoring and the cutting of the primitive profiles X1, X2 and X3 are performed, using the scoring tools with a free axis Z and the percussion assemblies, taking advantage of the interpolation of movement along the cutting axis Y thereof with the movement along the advancement axis X.

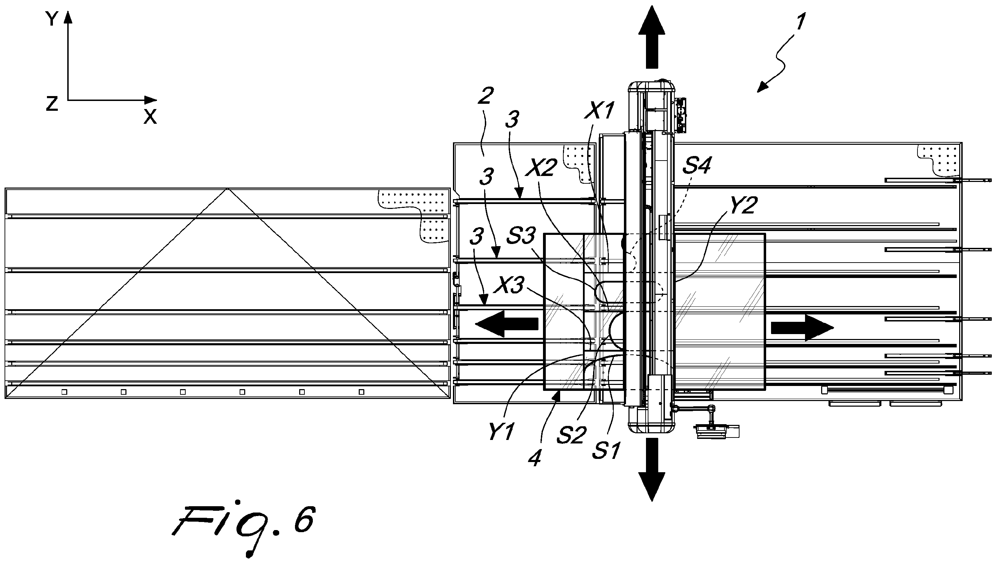

With particular reference to Figure 6, once the laminated glass sheet 4 is scored and cut along the primitive profiles X1, X2, X3, Y1 and Y2, the method proceeds with iteration of the scoring and cutting steps for the scoring and the cutting of the laminated glass sheet 4 according to the contoured profiles S1, S2, S3, S4.

It needs to be emphasized that this second iteration of the scoring and cutting steps occurs with the cells of the laminated glass sheet 4 - previously scored and cut along the primitive profiles X1, X2, X3, Y1 and Y2 - still interconnected by virtue of the film of plastic material.

In this way it is possible to use all of the sheet (or even the "sub-sheet" or a portion thereof) to perform the machining operations described above, making it possible to create primitives that are "physically isolated" from each other which prevents the unwanted propagation of the shaping cuts during their scoring and, even more, during their subsequent opening.

According to the invention, the simultaneous scoring step is obtained by interpolation of the movements of the laminated glass sheet 4 along the advancement axis X and of the scoring assemblies 10 along the cutting axis Y according to the geometry of the preset cutting profile, which therefore comprises both the contoured profiles S1, S2, S3 and S4 and also the primitive profiles X1, X2, X3, Y1 and Y2.

In more detail, the generic preset cutting profile can therefore comprise open curved profiles, closed curved profiles and straight profiles, which are oriented along the advancement axis X, along the cutting axis Y, or inclined with respect to these two axes.

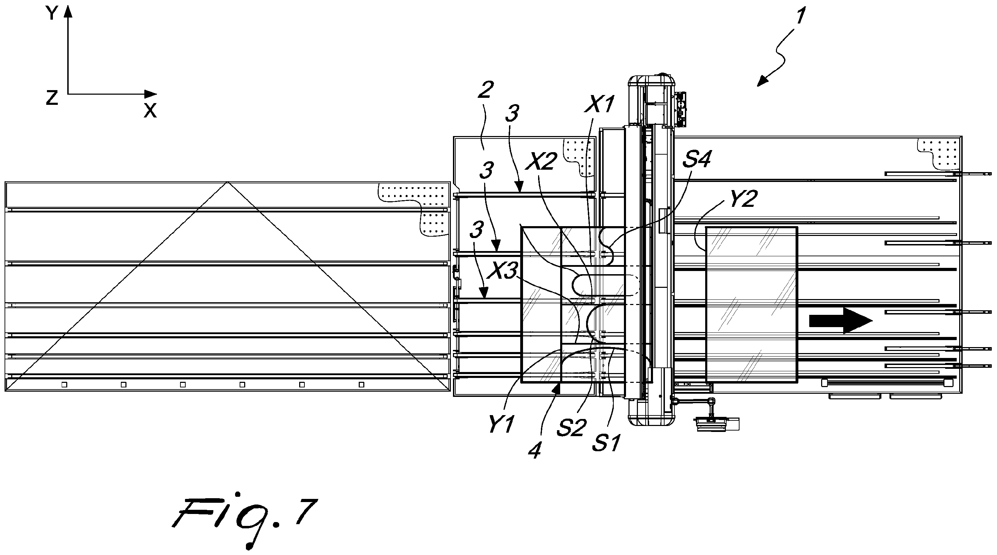

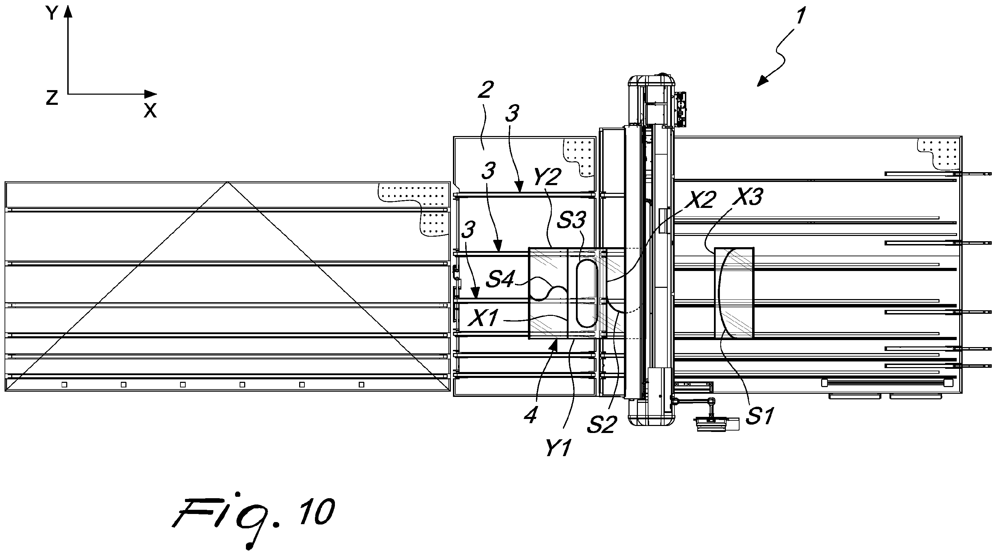

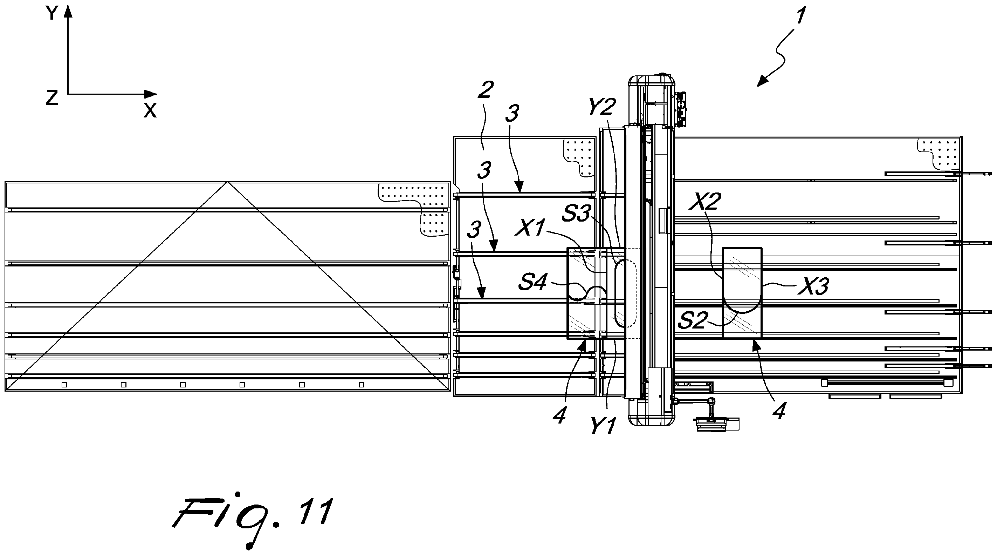

Subsequently, with particular reference to Figures 7 to 11, the method proceeds with obtaining the individual cells (containing the contoured profiles S1, S2, S3 and S4) in order to enable the shapes to be obtained.

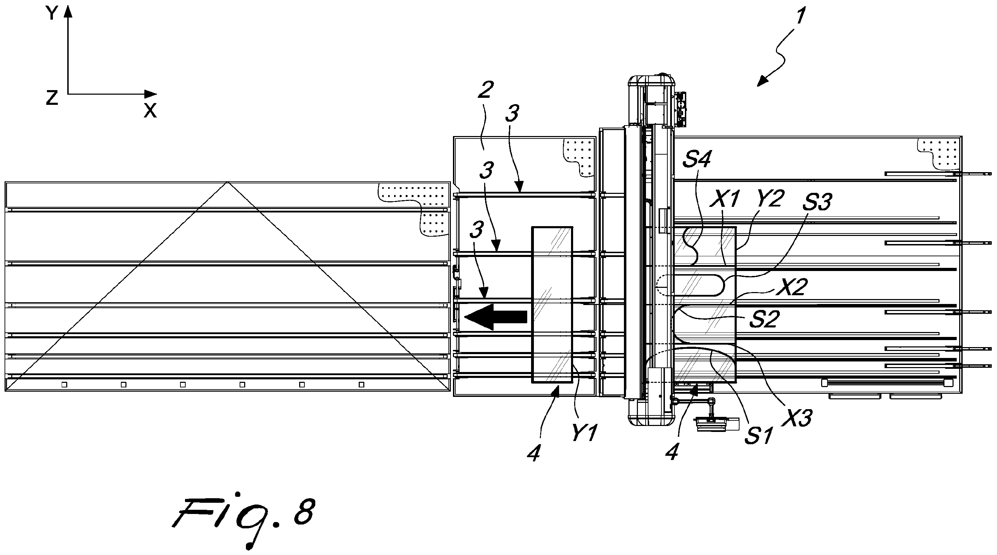

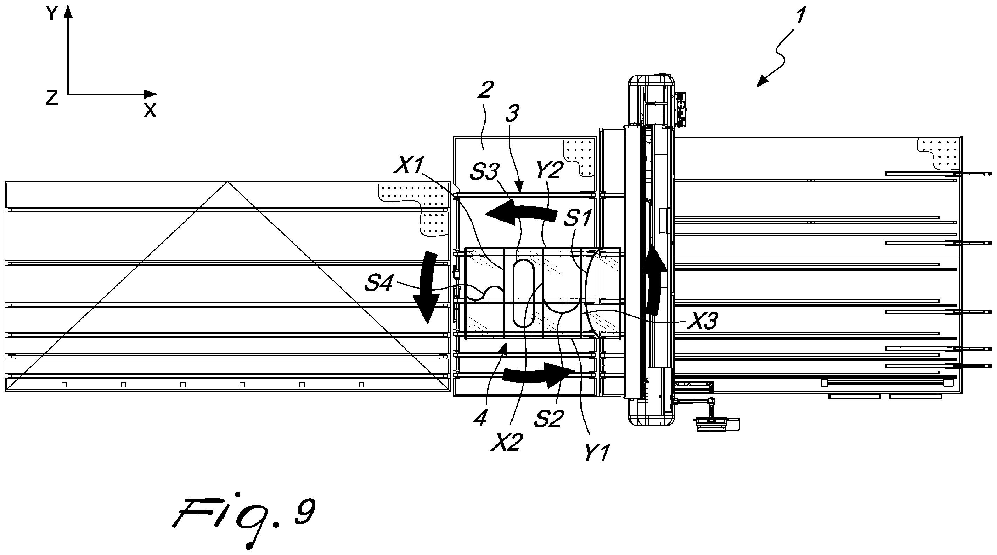

First of all, as shown in Figures 7 and 8, the method operates along the primitive profiles Y1 and Y2 - which are oriented in parallel to the cutting axis Y -; then, as shown in Figures 9 to 11, after performing a step of rotation through 90° of the laminated glass sheet 4, the method operates along the profiles X1, X2 and X3 - which initially are oriented in parallel to the advancement axis X.

Turning now to the step of separation, it is performed along a direction of mutual spacing apart of the parts of the laminated glass sheet 4 that is substantially perpendicular to the longitudinal extension of the primitive profile X1, X2, X3, Y1 or Y2 and substantially parallel to the advancement axis X.

In such case, the film of plastic material is cut with the two mutually opposite cutting heads 5 with a fixed axis, after pulling it and sufficiently heating it by making it oscillate along the advancement axis X over the heating element.

More specifically, the step of rotation of the laminated glass sheet 4 is performed in order to carry out the separation of the primitive profiles X1, X2 and X3 which are parallel to the advancement axis X.

In fact, the step of rotation is carried out between at least two steps of separation which are performed in mutual sequence according to the orientation of the primitive profiles X1, X2, X3, Y1 and Y2 - i.e. between the separation of the last primitive profile Y2, which is parallel to the cutting axis Y, and the first primitive profile X3, which is parallel to the advancement axis, for a first separation of the portions of the laminated glass sheet 4 according to the primitive profiles Y1 and Y2 which are oriented in parallel to the cutting axis Y followed by a second separation of the portions of the laminated glass sheet 4 according to the primitive profiles X1, X2 and X3 which initially are oriented in parallel to the advancement axis X.

With respect to the contoured profiles S1, S2, S3 and S4, if these have portions that are substantially parallel to the advancement axis X or to the cutting axis Y, the step of separation in this case is also performed along a direction of mutual spacing apart of the parts of the laminated glass sheet 4 that is substantially perpendicular to the longitudinal extension of the preset cutting profile and substantially parallel to the advancement axis X.

Conveniently, if the contoured profiles S1, S2, S3 and S4 have portions that are substantially parallel to the advancement axis X, the step of separation is preceded by a rotation through 90° in such a way that the film of plastic material is torn by traction during the step of separation.

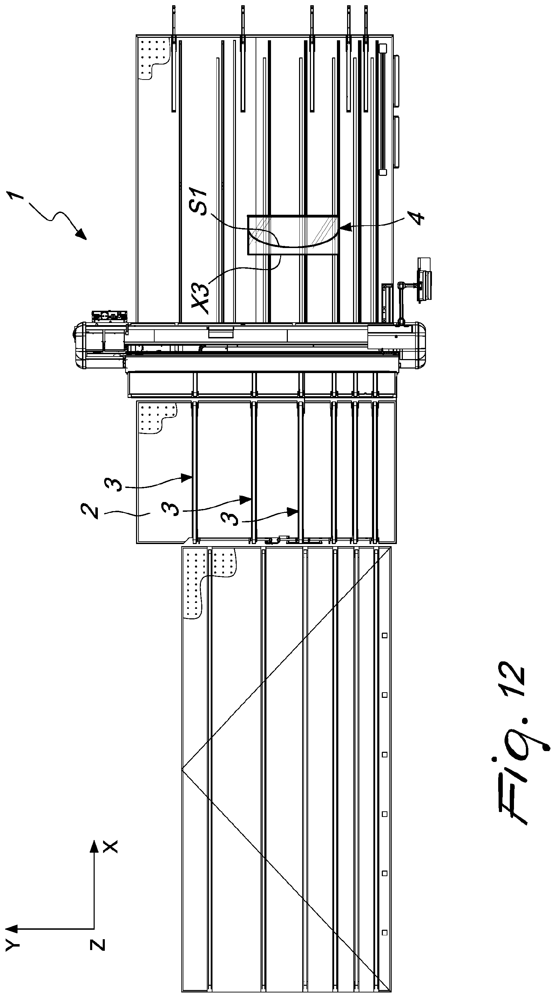

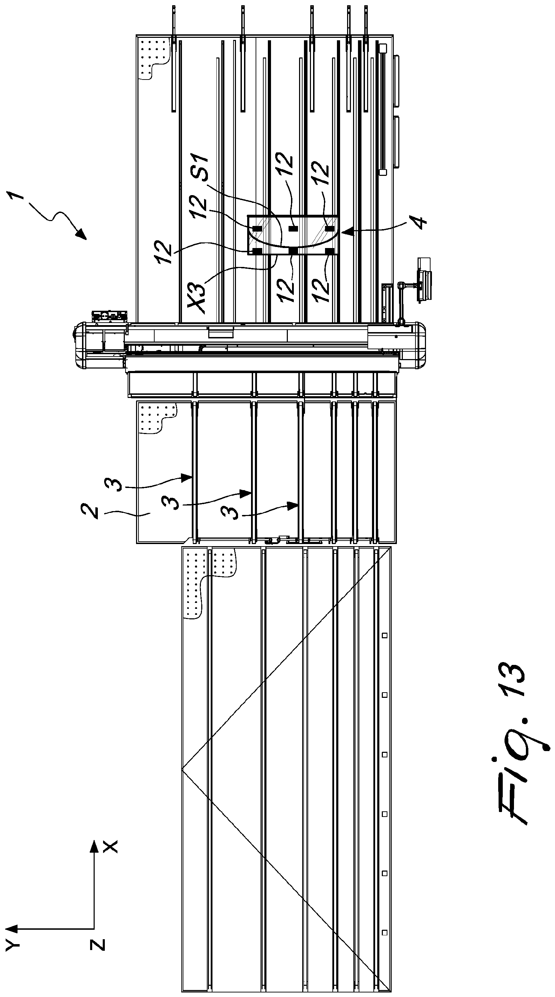

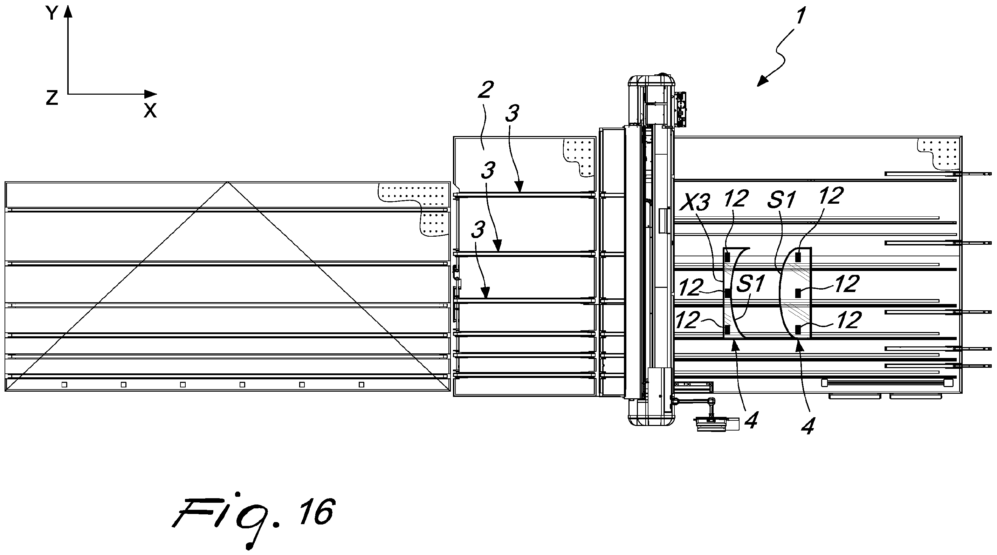

As shown in Figures 12 to 16 for the contoured profile S1, the separation step can comprise the positioning of a plurality of shim elements 12 on the upper surface of the laminated glass sheet 4 at one of the parts to be separated for the gripping thereof by a sheet presser, in such a way that the sheet presser does not engage the other one of the parts to be separated.

In fact, the other part to be separated is gripped by another sheet presser.

One of the two sheet pressers is of a fixed type and one is of a type that can move along the advancement axis X.

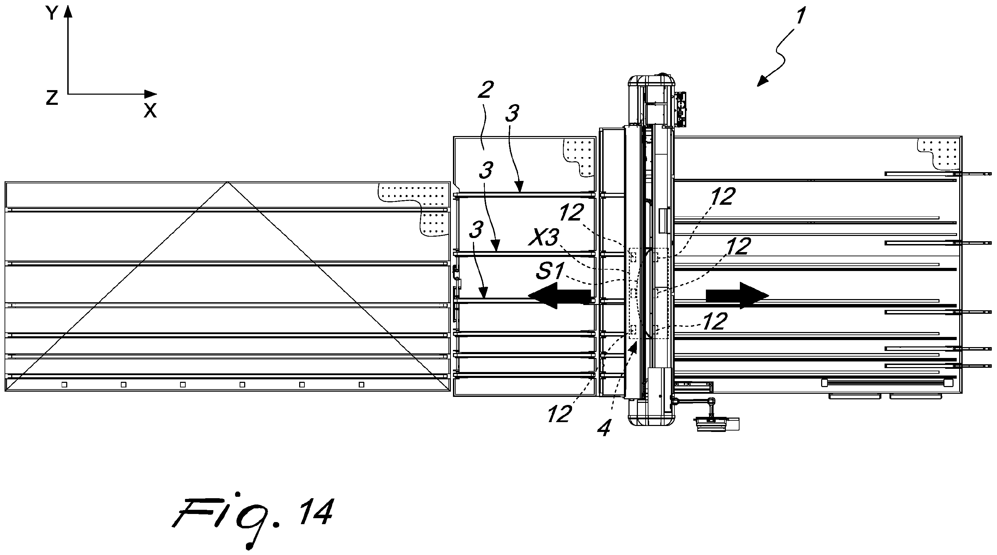

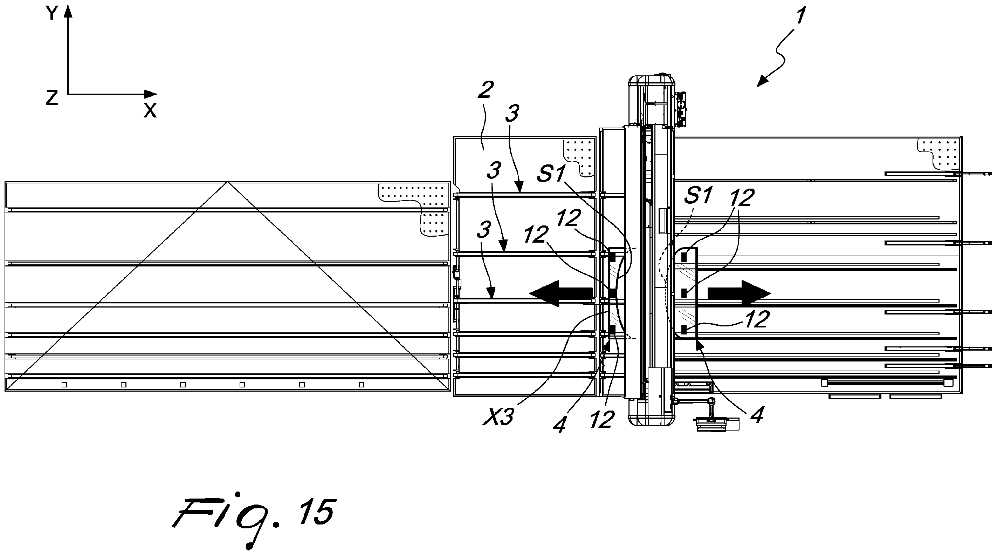

After the these shim elements 12 have been positioned, the cell containing the contoured profile S1 is caused to oscillate along the advancement axis X, with the aid of the belts, above the resistor element in order to heat the PVB and subsequently separated by tearing, as shown in Figures 14 and 15.

If the contoured profiles S2, S3 and S4 have portions that are substantially parallel both to the advancement axis X and to the cutting axis Y such that they do not allow the automatic separation of the parts of the glass sheet, then the individual cells, containing the outlines of the laminated glass sheet 4, already scored and cut, are passed to the operator who, according to the geometric shape structure of the individual shape, proceeds to separate them manually.

In fact, for particular shapes of outlines, in which the preset cutting profile has portions that are substantially parallel both to the advancement axis X and to the cutting axis Y, such that they would require separation of the film of plastic material by cutting and no longer by traction, the operator proceeds to separate them manually.

In practice it has been found that the automatic cutting method, particularly for laminated glass panes, according to the present invention, achieve the intended aim and objects in that they make it possible to perform a contoured curved cut without the operator intervening in the various steps except for unusual shapes with extremely complex geometry.

In fact, via interpolation of the movement of the carriages bearing the scoring assemblies and the percussion assemblies along the cutting axis with the advancement of the laminated glass sheet along the advancement axis, it is possible to produce any type of cutting profile, leaving the cutting of the film of plastic material to a separation step in which the film is torn by traction, or manually by the operator.

In more detail, an advantage of the machine and of the method according to the present invention consists in the fact that it uses the means used for the normal advancement of the glass sheet that are already present on the cutting line, i.e. the motorized belts.

Another advantage of the machine and of the method according to the present invention consists in that the separation step comes about by using two upper sheet pressers, one of which is fixed and one mobile, with the second one being mounted integrally to a detachment assembly that has a short travel stroke along the advancement axis.

Another advantage of the method according to the present invention consists in that they can process outlines of any dimensions and shape.

In fact, by virtue of the fact that the shapes are scored and opened without separating the individual parts of the glass sheet from each other, it is possible to make use of all of the sheet, meaning its full weight and its original dimensions, to perform the machining operations in order not to have unwanted movements during the movement of the glass for the machining operations, and to follow even shapes with unusual geometries (small, narrow etc.) which it would not be possible to clamp adequately (with various means) in order to move them.

In this way, it is possible to prevent the situation where shapes of dimensions that are too small can risk the glass being moved during the machining operations, with a consequent inaccuracy of the shape and of the dimensions of the finished product and/or where shapes with particularly complex geometries, such that the scoring is almost perpendicular to the cutting axis (such as for example in the case of a semicircle), lead to the tearing of the film of plastic material by cutting, resulting in an unacceptable delamination thereof.

Similarly, what is described above is also useful when orienting the shape perpendicularly to the cutting axis.

The last, but not least, advantage of the method according to the present invention consists in being able to optimize the reproduction of multiple shapes on a same glass sheet, thus avoiding leaving too much surplus material in order to allow the glass to be gripped for traction, and reducing the discarded material.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs

## Claims

1. An automatic cutting method for laminated glass panes, which comprises the following steps:
- advancing a laminated glass sheet (4) from a loading station to a cutting station of a cutting machine (1) along a substantially straight advancement axis (X) which is parallel to the planar extension of said laminated glass sheet (4), said laminated glass sheet (4) being constituted by two sheets of monolithic glass with at least one film of plastic material interposed between them;
- simultaneously scoring the lower and upper surfaces of said laminated glass sheet (4) according to at least one preset cutting profile by means of at least one of two mutually opposite cutting heads with a fixed axis and two mutually opposite scoring assemblies (10) which are arranged, respectively, below and above said laminated glass sheet (4); said scoring assemblies (10) being movable along a substantially straight cutting axis (Y) which is parallel to the planar extension of said laminated glass sheet (4) and perpendicular to said advancement axis (X);
- cutting in sequence of both of the scorings performed in said simultaneous scoring step;
**characterized in that** it comprises:
- a step of defining primitive profiles (X1, X2, X3, Y1, Y2) of the straight type which are oriented, respectively, in parallel to said advancement axis (X) and to said cutting axis (Y) in order to define a grid inside the cells of which the contoured profiles (S1, S2, S3, S4) of the contour of said laminated glass sheet (4) to be obtained are contained;
- iterating said simultaneous scoring step and said cutting step for the scoring and cutting of said laminated glass sheet (4) according to said primitive profiles (X1, X2, X3, Y1, Y2);
- iterating said simultaneous scoring step and said cutting step for the scoring and cutting of said laminated glass sheet (4) according to said contoured profiles (S1, S2, S3, S4);
said preset cutting profile comprising said primitive profiles (X1, X2, X3, Y1, Y2) and said contoured profiles (S1, S2, S3, S4) and said simultaneous scoring step being obtained from the interpolation of the movements of said laminated glass sheet (4) along said advancement axis (X) and of said scoring assemblies (10) along said cutting axis (Y) according to the geometry of said preset cutting profile; said scoring assemblies (10) comprising scoring tools with a free axis (Z) which is oriented substantially perpendicularly to a horizontal worktable (2) which contains said advancement axis (X) and said cutting axis (Y).

2. The method according to claim 1, **characterized in that** it comprises at least one step of rotation of said laminated glass sheet (4) in order to perform a step of separation of said primitive profiles (X1, X2, X3) which are parallel to said advancement axis (X); said at least one step of rotation being performed between at least two steps of separation performed in mutual sequence according to the orientation of said primitive profiles (X1, X2, X3, Y1, Y2), respectively, for the separation of the portions of said laminated glass sheet (4) according to said primitive profiles (Y1, Y2) which are oriented in parallel to said cutting axis (Y) and for the separation of the portions of said laminated glass sheet (4) according to said primitive profiles (X1, X2, X3) which are initially oriented parallel to said advancement axis (X).

3. The method according to claim 1 or 2, **characterized in that** said cutting step is performed by means of at least one from a cutting bar, a cutting wheel and two mutually opposite percussion assemblies (11) which are arranged respectively below and above said laminated glass sheet (4); said percussion assemblies (11) being movable along said cutting axis (Y) and acting on said laminated glass sheet (4) according to a preset path corresponding to said preset cutting profile.

4. The method according to claim 3, **characterized in that** said cutting step is performed by means of interpolation of the movements of said laminated glass sheet (4) along said advancement axis (X) and of said percussion assemblies (11) along said cutting axis (Y).

5. The method according to one or more of the preceding claims, **characterized in that** said separation step, if said contoured profiles (S1, S2, S3, S4) have portions that are substantially parallel to said advancement axis (X) or to said cutting axis (Y), is performed along a direction of mutual spacing apart of said parts of said laminated glass sheet (4) that is substantially perpendicular to the longitudinal extension of said preset cutting profile and is substantially parallel to said advancement axis (X); if said contoured profiles (S1, S2, S3, S4) have portions that are substantially parallel to said advancement axis (X), said separation step being preceded by said rotation step; said at least one film of plastic material being torn by traction during said separation step.

6. The method according to claim 5, **characterized in that** said separation step comprises the positioning of a plurality of shim elements (12) on said upper surface of said laminated glass sheet (4) at at least one of said parts to be separated for the gripping thereof by a sheet presser, in such a way that the sheet presser does not engage the other one of said parts to be separated, said other part to be separated being gripped by another sheet presser, one of said sheet pressers being of a fixed type and one being of a type that can move along said advancement axis (X).

7. The method according to claims 5 and 6, **characterized in that** said separation step, if said contoured profiles (S1, S2, S3, S4) have portions that are substantially parallel both to said advancement axis (X) and to said cutting axis (Y), is performed manually by an operator.

## Patentansprüche

1. Ein automatisches Schneidverfahren für Verbundglasscheiben, das folgende Schritte umfasst:
- das Zuführen einer Verbundglasscheibe (4) von einer Beladestation an eine Schneidestation einer Schneidmaschine (1) entlang einer im Wesentlichen geraden Vorschubachse (X), die parallel zur planaren Ausdehnung der Verbundglasscheibe (4) ist, wobei die Verbundglasscheibe (4) aus zwei Platten von monolithischem Glas mit mindestens einer zwischen ihnen angeordneten Folie aus Kunststoffmaterial besteht;
- das gleichzeitige Einkerben der oberen und unteren Oberflächen der Verbundglasscheibe (4) entsprechend mindestens einem vordefinierten Schneideprofil mit Hilfe mindestens eines von zwei einander gegenüberliegenden Schneidköpfen mit fester Achse und zwei einander gegenüberliegenden Einkerbaufbauten (10), die oberhalb bzw. unterhalb der Verbundglasscheibe (4) angeordnet sind; wobei die Einkerbaufbauten (10) entlang einer im Wesentlichen geraden Schneidachse (Y) beweglich sind, die parallel zur planaren Ausdehnung der Verbundglasscheibe (4) und senkrecht zu der Vorschubachse (X) ist;
- das sequentielle Schneiden beider Einkerbungen, die in dem Schritt gleichzeitigen Einkerbens vorgenommen wurden;
**dadurch gekennzeichnet, dass** es Folgendes umfasst:
- einen Schritt des Bestimmens einfacher Profile (X1, X2, X3, Y1, Y2) vom geraden Typ, die parallel zu der Vorschubachse (X) beziehungsweise zu der Schneidachse (Y) ausgerichtet sind, um ein Raster zu bestimmen, in dessen Zellen die konturierten Profile (S1, S2, S3, S4) der Kontur der herzustellenden Verbundglasscheibe (4) enthalten sind;
- das Wiederholen des Schritts gleichzeitigen Einkerbens und des Schneideschritts zum Einkerben und Schneiden der Verbundglasscheibe (4) entsprechend den einfachen Profilen (X1, X2, X3, Y1, Y2);
- das Wiederholen des Schritts gleichzeitigen Einkerbens und des Schneideschritts zum Einkerben und Schneiden der Verbundglasscheibe (4) entsprechend den konturierten Profilen (S1, S2, S3, S4);
wobei das vordefinierte Schneideprofil die einfachen Profile (X1, X2, X3, Y1, Y2) und die konturierten Profile (S1, S2, S3, S4) umfasst und der Schritt gleichzeitigen Einkerbens anhand der Interpolation der Bewegungen der Verbundglasscheibe (4) entlang der Vorschubachse (X) und der Einkerbaufbauten (10) entlang der Schneidachse (Y) entsprechend der Geometrie des vordefinierten Schneideprofils gewonnen wird; wobei die Einkerbaufbauten (10) Einkerbwerkzeuge mit einer freien Achse (Z) umfassen, die im Wesentlichen senkrecht zu einem horizontalen Werktisch (2) ausgerichtet ist, welcher die Vorschubachse (X) und die Schneidachse (Y) enthält.

2. Das Verfahren gemäß Anspruch 1, **dadurch gekennzeichnet, dass** es mindestens einen Schritt des Drehens der Verbundglasscheibe (4), um einen Schritt des Trennens der einfachen Profile (X1, X2, X3) durchzuführen, die parallel zu der Vorschubachse (X) sind, umfasst; wobei der mindestens eine Drehungsschritt zwischen mindestens zwei Trennschritten durchgeführt wird, welche sequentiell entsprechend der Ausrichtung der einfachen Profile (X1, X2, X3, Y1, Y2) durchgeführt werden, nämlich zur Trennung der Abschnitte der Verbundglasscheibe (4) entsprechend den einfachen Profilen (Y1, Y2), die parallel zu der Schneidachse (Y) ausgerichtet sind, und zur Trennung der Abschnitte der Verbundglasscheibe (4) entsprechend den einfachen Profilen (X1, X2, X3), die ursprünglich parallel zu der Vorschubachse (X) ausgerichtet sind.

3. Das Verfahren gemäß Anspruch 1 oder 2, **dadurch gekennzeichnet, dass** der Schneideschritt mit Hilfe mindestens eines von einem Schneidbalken, einem Schneidrad und zwei einander gegenüberliegenden Schlagaufbauten (11) durchgeführt wird, die oberhalb beziehungsweise unterhalb der Verbundglasscheibe (4) angeordnet sind; wobei die Schlagaufbauten (11) entlang der Schneidachse (Y) beweglich sind und auf die Verbundglasscheibe (4) entsprechend einem vordefinierten Weg einwirken, der dem vordefinierten Schneideprofil entspricht.

4. Das Verfahren gemäß Anspruch 3, **dadurch gekennzeichnet, dass** der Schneideschritt durch Interpolation der Bewegungen der Verbundglasscheibe (4) entlang der Vorschubachse (X) und der Schlagaufbauten (11) entlang der Schneidachse (Y) durchgeführt wird.

5. Das Verfahren gemäß einem oder mehreren der obigen Ansprüche, **dadurch gekennzeichnet, dass** der Trennschritt, wenn die konturierten Profile (S1, S2, S3, S4) Abschnitte haben, die im Wesentlichen parallel zu der Vorschubachse (X) oder zu der Schneidachse (Y) sind, in einer Richtung gegenseitigen Beabstandens der Teile der Verbundglasscheibe (4) durchgeführt wird, die im Wesentlichen senkrecht zur Längserstreckung des vordefinierten Schneideprofils und im Wesentlichen parallel zu der Vorschubachse (X) ist; wobei dem Trennschritt, falls die konturierten Profile (S1, S2, S3, S4) Abschnitte haben, die im Wesentlichen parallel zu der Vorschubachse (X) sind, der Drehungsschritt vorausgeht; wobei die mindestens eine Folie aus Kunststoffmaterial während des Trennschritts durch Zug zerrissen wird.

6. Das Verfahren gemäß Anspruch 5, **dadurch gekennzeichnet, dass** der Trennschritt die Positionierung einer Vielzahl von Unterlegelementen (12) auf die obere Oberfläche der Verbundglasscheibe (4) an mindestens einem der zu trennenden Teile zum Ergreifen derselben durch eine Scheibenpressvorrichtung umfasst, derart, dass die Scheibenpressvorrichtung nicht in Eingriff mit dem anderen der zu trennenden Teile steht, wobei das andere zu trennende Teil von einer anderen Scheibenpressvorrichtung ergriffen wird, wobei eine der Scheibenpressvorrichtungen vom festen Typ ist und eine von einem Typ ist, der sich entlang der Vorschubachse (X) bewegen kann.

7. Das Verfahren gemäß Anspruch 5 und 6, **dadurch gekennzeichnet, dass** der Trennschritt, wenn die konturierten Profile (S1, S2, S3, S4) Abschnitte haben, die im Wesentlichen sowohl zu der Vorschubachse (X) als auch zu der Schneidachse (Y) parallel sind, von einem Bediener manuell durchgeführt wird.

## Revendications

1. Procédé de découpe automatique pour des vitres de verre feuilleté, qui comprend les étapes suivantes consistant à :
faire avancer un panneau de verre feuilleté (4) d'une station de chargement à une station de coupe d'une machine de coupe (1) le long d'un axe d'avancement (X) sensiblement droit qui est parallèle à l'extension plane dudit panneau de verre feuilleté (4), ledit panneau de verre feuilleté (4) étant constitué par deux panneaux de verre monolithique avec au moins un film de matière plastique intercalé entre eux ;
inciser simultanément les surfaces inférieure et supérieure dudit panneau de verre feuilleté (4) selon au moins un profil de coupe prédéterminé au moyen d'au moins l'une de deux têtes de coupe mutuellement opposées avec un axe fixe et deux ensembles d'incision (10) mutuellement opposés qui sont agencés, respectivement au-dessous et au-dessus dudit panneau de verre feuilleté (4) ; lesdits ensembles d'incision (10) étant mobiles le long d'un axe de coupe (Y) sensiblement droit qui est parallèle à l'extension plane dudit panneau de verre feuilleté (4) et perpendiculaire audit axe d'avancement (X) ;
couper en séquence deux des incisions pratiquées à ladite étape d'incision simultanée ;
**caractérisé en ce qu'**il comprend :
une étape consistant à définir des profils primitifs (X1, X2, X3, Y1, Y2) du type droit qui sont respectivement orientés, en parallèle par rapport audit axe d'avancement (X) et audit axe de coupe (Y) afin de définir une grille à l'intérieur des cellules de laquelle sont contenus les profils profilés (S1, S2, S3, S4) du contour dudit panneau de verre feuilleté (4) à obtenir ;
répéter ladite étape d'incision simultanée et ladite étape de coupe pour l'incision et la coupe dudit panneau de verre feuilleté (4) selon lesdits profils primitifs (X1, X2, X3, Y1, Y2) ;
répéter ladite étape d'incision simultanée et ladite étape de coupe pour l'incision et la coupe dudit panneau de verre feuilleté (4) selon lesdits profils profilés (S1, S2, S3, S4) ;
ledit profil de coupe prédéterminé comprenant lesdits profilés primitifs (X1, X2, X3, Y1, Y2) et lesdits profils profilés (S1, S2, S3, S4) et ladite étape d'incision simultanée étant obtenue à partir de l'interpolation des mouvements dudit panneau de verre feuilleté (4) le long dudit axe d'avancement (X) et desdits ensembles d'incision (10) le long dudit axe de coupe (Y) selon la géométrie dudit profil de coupe prédéterminé ; lesdits ensembles d'incision (10) comprenant des ustensiles inciseurs avec un axe libre (Z) qui est orienté sensiblement perpendiculairement à un plan de travail horizontal (2) qui contient ledit axe d'avancement (X) et ledit axe de coupe (Y).

2. Procédé selon la revendication 1, **caractérisé en ce qu'**il comprend au moins une étape de rotation dudit panneau de verre feuilleté (4) afin de réaliser une étape de séparation desdits profils primitifs (X1, X2, X3) qui sont parallèles audit axe d'avancement (X) ; ladite au moins une étape de rotation étant réalisée entre au moins deux étapes de séparation réalisées en séquence mutuelle selon l'orientation desdits profils primitifs (X1, X2, X3, Y1, Y2) respectivement, pour la séparation des parties dudit panneau de connecteur flexible (4) selon lesdits profils primitifs (Y1, Y2) qui sont orientés en parallèle par rapport audit axe de coupe (Y) et pour la séparation des parties dudit panneau de verre feuilleté (4) selon lesdits profils primitifs (X1, X2, X3) qui sont initialement orientés parallèlement audit axe d'avancement (X).

3. Procédé selon la revendication 1 ou 2, **caractérisé en ce que** ladite étape de coupe est réalisée au moyen d'au moins l'un parmi une barre de coupe, une roue de coupe et deux ensembles de percussion (11) mutuellement opposés qui sont respectivement agencés au-dessous et au-dessus dudit panneau de verre feuilleté (4) ; lesdits ensembles de percussion (11) étant mobiles le long dudit axe de coupe (Y) et agissant sur ledit panneau de verre feuilleté (4) selon une trajectoire prédéterminée correspondant audit profil de coupe prédéterminé.

4. Procédé selon la revendication 3, **caractérisé en ce que** ladite étape de coupe est réalisée au moyen de l'interpolation des mouvements dudit panneau de verre feuilleté (4) le long dudit axe d'avancement (X) et desdits ensembles de percussion (11) le long dudit axe de coupe (Y).

5. Procédé selon une ou plusieurs des revendications précédentes, **caractérisé en ce que** ladite étape de séparation, si lesdits profils profilés (S1, S2, S3, S4) ont des parties qui sont sensiblement parallèles audit axe d'avancement (X) ou audit axe de coupe (Y), est réalisée le long d'une direction d'espacement mutuel desdites parties dudit panneau de verre feuilleté (4) qui est sensiblement perpendiculaire à l'extension longitudinale dudit profil de coupe prédéterminé et est sensiblement parallèle audit axe d'avancement (X) ; si lesdits profils profilés (S1, S2, S3, S4) ont des parties qui sont sensiblement parallèles audit axe d'avancement (X), ladite étape de séparation étant précédée par ladite étape de rotation ; ledit au moins un film en matière plastique étant déchiré par traction pendant ladite étape de séparation.

6. Procédé selon la revendication 5, **caractérisé en ce que** ladite étape de séparation comprend le positionnement d'une pluralité d'éléments de calage (12) sur ladite surface supérieure dudit panneau de verre feuilleté (4) au niveau d'au moins l'une desdites parties à séparer pour sa préhension par un presse-panneau, de sorte que le presse-panneau ne met pas en prise l'autre desdites parties à séparer, ladite autre partie à séparer étant saisie par un autre presse-panneau, l'un desdits presse-panneau étant du type fixe et l'un étant du type qui peut se déplacer le long dudit axe d'avancement (X).

7. Procédé selon les revendications 5 et 6, **caractérisé en ce que** ladite étape de séparation, si lesdits profils profilés (S1, S2, S3, S4) ont des parties qui sont sensiblement parallèles à la fois audit axe d'avancement (X) et audit axe de coupe (Y), est réalisée manuellement par un opérateur.
